# EUROPÄISCHE PATENTSCHRIFT

(11) **EP 3 433 079 B1**
(45) Veröffentlichungstag und Bekanntmachung des Hinweises auf die Patenterteilung: **25.08.2021**
(21) Anmeldenummer: 17713283.4
(22) Anmeldetag: 23.03.2017
(51) Int. Cl.: B29C 65/48, B29C 65/34, B29C 65/82, B29C 65/50, B29C 65/78, C09J 5/06, B29C 65/00, F16B 11/00

(54) **VERFAHREN ZUM VERBINDEN ZWEIER FÜGEELEMENTE**
METHOD FOR CONNECTING TWO JOINING ELEMENTS
PROCÉDÉ POUR ASSEMBLER DEUX ÉLÉMENTS D'ASSEMBLAGE

(30) Priorität: 24.03.2016 DE 102016205039
(43) Veröffentlichungstag der Anmeldung: 30.01.2019
(73) Patentinhaber: Fraunhofer-Gesellschaft zur Förderung der angewandten Forschung e.V., 80686 München (DE)
(72) Erfinder: LÜHRING, Andreas, 26180 Rastede (DE); KLEEMEIER, Malte, 28213 Bremen (DE)
(74) Vertreter: Eisenführ Speiser
(86) Internationale Anmeldenummer: PCT/EP2017/057003
(87) Internationale Veröffentlichungsnummer: WO 2017/162829

(56) Entgegenhaltungen:
- EP-A2- 0 067 621
- EP-A2- 0 067 621
- WO-A1-99/21694
- WO-A1-99/21694
- JP-A- H09 109 263
- JP-A- H09 109 263
- US-A- 5 500 510
- US-A- 5 500 510

## Beschreibung

Die vorliegende Erfindung betrifft ein Verfahren zum Verbinden zweier Fügeelemente, wobei diese mittels eines thermischen aktivierbaren Klebstoffes und eines darin angeordneten flächigen Heizelementes durch geeignetes Erwärmen des Klebstoffes verbunden werden. Die Erfindung betrifft auch eine Anordnung, eingerichtet zur Durchführung eines entsprechenden Verfahrens.

In der industriellen klebtechnischen Fertigung gewinnen vorapplizierbare Strukturklebstoffe (englisch: pre-applicable structural adhesives, kurz: PASA) zunehmende Bedeutung. Dabei handelt es sich um bei Raumtemperatur feste, thermoplastische Materialien, die durch Temperatureinwirkung zu chemisch vernetzten Kunststoffen (Duromeren) ausgehärtet werden können. Die Klebrigkeit der Materialien im unausgehärteten Zustand und die Festigkeit nach der Aushärtung lassen über die Wahl der Rohstoffe gezielt den Erfordernissen der jeweiligen Anwendung anpassen. Gewöhnlich bestehen PASA-Materialien aus Festharzen auf Epoxidbasis, thermoplastischen Polymeren zur Schlagzähmodifizierung und einem latenten Härtersystem. Letzteres ermöglicht eine gute Lagerfähigkeit der Klebstoffe bis zum Einsatz.

Der besondere Vorteil von PASA-Materialien liegt in der räumlichen und zeitlichen Trennung von zwei elementaren Schritten der klebtechnischen Fertigung, dem Klebstoffauftrag und der Aushärtung. So lassen sich damit vorbeschichtete Bauteile herstellen, die vom Anwender direkt seinem Fertigungsprozess zugeführt werden können. Für den Anwender bedeutet der Verzicht auf die Klebstoffapplikation eine deutliche Prozessvereinfachung. So werden zum Beispiel Anschaffungs- und Betriebskosten für die Auftragsanlagen gespart, außerdem entfällt der Umgang mit reaktiven Klebstoffsystemen, die häufig Gefahrstoffe darstellen.

Obwohl sich PASA-Materialien wie gewöhnliche strukturelle Klebstoffe durch Ofenhärtung aushärten lassen, eignen sie sich speziell für Schnellhärtungsprozesse, bei denen die Wärme nur lokal im Bereich der zu fügenden Bauteile eingebracht wird. Auf diese Weise lassen sich kurze Aushärtungszeiten im Bereich von einigen Minuten bis zu Sekunden erreichen und umliegende, möglicherweise temperaturempfindliche Strukturen werden nicht negativ beeinflusst.

Als Möglichkeiten zum schnellen lokalen Wärmeeintrag stehen nach dem gegenwärtigen Stand der Technik die induktive Erwärmung, sowie die Erwärmung durch Mikrowellen, Infrarotstrahlung oder Heißluft zur Verfügung. Diese Techniken ermöglichen gegenüber einer konventionellen Ofenhärtung schon eine erhebliche Energieeinsparung, dennoch liegt die elektrische Anschlussleistung gängiger Mikrowellenanlagen, Infrarotstrahler und Heißluftgebläse immer noch im Bereich im Bereich einiger Kilowatt. Durch den relativ hohen Energiebedarf und die damit häufig erforderliche verbundene Notwendigkeit zur aktiven Gerätekühlung, ergibt sich oft ein hoher Platzbedarf bzw. ein hohes Gewicht, so dass die Konstruktion von kompakten manuell oder Roboter-geführten Systemen zur lokalen Erwärmung aufwendig ist.

Für eine zuverlässige Schnellhärtung von Klebstoffen ist eine möglichst präzise Temperaturkontrolle während des Prozesses wünschenswert. Normalerweise erfolgt die Härtung nur in einem engen Temperaturfenster, das je nach verwendetem Klebstoffsystem zwischen 100 und 250 °C liegt, optimal. Eine Unterschreitung der optimalen Härtungstemperatur führt zu einer reduzierten Festigkeit und Beständigkeit der Klebverbindung, während der Klebstoff bei einer Überhitzung der Klebstoff direkt thermisch geschädigt wird. Da bei einer Schnellhärtung mit hohen Aufheiz- und Abkühlgeschwindigkeiten gearbeitet wird, treten notwendigerweise starke Temperaturgradienten zwischen Klebstoff und zu fügenden Bauteilen auf, so dass die Temperatur im Klebstoff nicht mit der von außen messbaren Bauteiltemperatur gleichgesetzt werden darf. Es ist zwar möglich, rechnerisch von der Bauteiltemperatur auf die Temperatur des Klebstoff zu schließen, allerdings müssen die notwendigen Korrekturfaktoren in aufwendigen Versuchsreihen ermittelt werden und sind jeweils nur für eine bestimmte Kombination aus Bauteilen und Klebstoff anwendbar.

Die EP0141065 B1 offenbart ein Verfahren zum Kleben von Metallteilen unter Verwendung eines in den Klebstoff eingebetteten Drahtes. Allerdings ist bei der in diesem Dokument beschriebenen Konstellation eine genaue Temperaturkontrolle nicht möglich, da die Erwärmung mit Hilfe eines Drahtes zu einer linienförmigen Erwärmung führt und auch nur die Temperaturmessung ein einem linienförmigen Bereich der Klebfuge erfasst, Die gesamte Klebfuge kann so nicht erfasst werden. Ferner betrifft die EP0141065B1 den Einsatz stark exotherm reagierender Klebstoffe. Dies ist erforderlich, weil der Heizdraht allenfalls in seiner unmittelbaren Nähe die Härtungsreaktions des Klebstoffs starten kann, er ist hingegen nicht in der Lage eine flächige Klebfuge auf die notwendige Härtungstemperatur zu bringen.

Die DE2362247A beschreibt ein Heizelement aus einer Stahlfolie, die beidseitig mit einem "temperaturempfindlichen" Klebstoff, der auch chemisch aushärten kann, beschichtet ist. Eine differenzierte Temperaturkontrolle ist nicht vorgesehen.

Die US20030116282 beschreibt Befestigungselemente, die mit Hilfe eines Klebstoffs auf einem Bauteil angebracht werden können. Die Klebstoffaushärtung wird durch ein in die Klebschicht eingebrachtes elektrisches Heizelement beschleunigt. Anwendungsfelder für diese Art von Befestigungselementen werden u.a. im Automobilbau und in der Luftfahrtindustrie gesehen. Das eingesetzte Heizelement ist als Draht beschrieben. Der Einsatz einer linienförmingen Wärmequelle (Heizdraht) bedingt die bereits zur EP0141065B1 beschriebenen Nachteile. Auch hier ist eine effektive Temperaturkontrolle nicht beschrieben.

Auch die Dokumente WO99/21694A1, EP0067621A2, US5500510A und JP09109263A betreffen das Verbinden von Fügeelemten.

Ausgehend vor dem Hintergrund des Standes der Technik war es Aufgabe der vorliegenden Erfindung, ein Verfahren anzugeben, bei dem ein zuverlässiges Verbinden zweier Fügeelemente mittels eines thermisch aktivierbaren Klebstoffes gewährleistet ist, wobei bevorzugt möglichst wenig Energie für die Aktivierung des Klebstoffes aufgewendet werden sollte und wobei das Verfahren bevorzugt auch für temperaturempfindliche Oberflächen geeignet sein sollte. Insbesondere sollten Temperaturspitzen vermieden werden können und gewährleistet sein, dass die benötigten Temperaturen für eine optimale Härtung vorhanden sind.

Diese Aufgabe wird gelöst durch ein Verfahren gemäß Anspruch 1.

Ein Fügeelement im Sinne der vorliegenden Erfindung ist ein (Teil-)Gegenstand, der mit einem weiteren (Teil-)Gegenstand verbunden werden soll. Im Falle von Teil-Gegenständen, kann es sein, dass beide Fügeelemente zu einem einzigen Gegenstand gehören, zum Beispiel wenn ein Ring gebildet werden soll.

Ein thermischer aktivierbarer Klebstoff ist ein Klebstoff, der erst durch Beaufschlagung mit thermischer Energie seine Klebwirkung entwickelt. Bevorzugt ist ein thermisch aktivierbarer Klebstoff ein solcher, der bei Raumtemperatur (vor Beaufschlagung mit thermischer Energie) nicht aktiv ist, das bedeutet keine oder allenfalls eine Klebewirkung von ≤ 10 % verglichen mit der Klebewirkung nach der thermischen Aktivierung besitzt, wobei die Klebewirkung durch die Zugscherfestigkeit nach DIN EN 1465 ermittelt wird.

Ein Heizelement im Sinne der vorliegenden Erfindung ist eine Vorrichtung oder ein Vorrichtungsteil, die oder das in der Lage ist, thermische Energie abzugeben. Bevorzugt ist ein als Element im Sinne der vorliegenden Erfindung ein solches, das in der Lage ist, elektrische Energie in thermische Energie umzuwandeln.

Ein flächiges Heizelement im Sinne der vorliegenden Anmeldung ist ein Heizelement, dessen Ausdehnung in zwei Raumrichtungen um den Faktor ≥ 4, bevorzugt ≥ 40, besonders bevorzugt ≥ 400 größer ist als in der dritten Raumrichtung. Ferner liegt das Verhältnis der längsten zur zweitlängsten Seite im Bereich von 1000:1 bis 1:1. Der Fachmann wird hierzu das Heizelement in geeigneter Weise anordnen.

Erfindungsgemäß ist das Heizelement also als dünnes Flächengebilde ausgeführt. Das bedeutet, dass es ein erfindungsgemäßes einzusetzendes Heizelement kein einfacher Draht ist.

Bevorzugt in diesem Zusammenhang ist, dass das Heizelement ein Metallnetz, eine Metallfolie, eine Graphitfolie, ein Kohlefasergewebe oder ein Kohlefaser-Polymerfaser-Mischgewebe, eine strukturierte Graphit- oder Metallfolie, eine Folie mit einem oder mehreren Schlitzen oder ein an die Klebegeometrie angepasstes Flächengebilde ist.

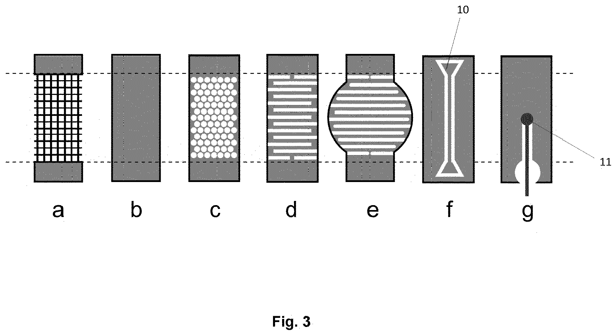

Beispiele für erfindungsgemäße Folien sind schematisch in der Figur 3 abgebildet. Hierzu wird auf weiter unten verwiesen. Das erfindungsgemäß einzusetzende flächige Heizelement wird mittig im thermisch aktivierbaren Klebstoff angeordnet.

Bevorzugte thermisch aktivierbare Klebstoffe (oder auch PASA-Materialien) sind im nicht aktivierten Zustand fest, insbesondere bei Raumtemperatur. Weiterhin ist es erfindungsgemäß bevorzugt, dass der einzusetzende Klebstoff im ausgehärteten Zustand ein Duromer ist.

Bevorzugte Klebstoffe im Sinne der vorliegenden Erfindung sind ausgewählt aus der Gruppe bestehend aus Epoxidharzklebstoffen, Polyurethan- und Polyharnstoff-Klebstoffen, Silikonklebstoffen, Polyacrylatklebstoffen und Phenolharzen.

Bevorzugt im Sinne der Erfindung ist, dass der Aushärtevorgang des eingesetzten Klebstoffes selbst keinen nennenswerten Beitrag zur Erwärmung der Klebfuge leistet (d.h. weniger als 10% des Energieeintrages beim Aushärten stammen aus der Aushärtreaktion). Dies wird durch eine dünne Klebfuge oder durch eine geringe Exothermie des Klebstoffes erreicht. Dadurch ist eine bessere Temperaturkontrolle beim Aushärten möglich.

Maßgeblich für die vorliegende Erfindung ist es, die Temperatur möglichst dicht am Klebstoff zu messen, faktisch ist dies möglich, indem die Temperatur des Heizelementes gemessen wird. Dies entspricht einer Messung der Temperatur des Klebstoffes im Sinne des oben beschriebenen erfindungsgemäßen Verfahrens.

Durch das erfindungsgemäße Verfahren ist es möglich, Klebstoffe in kurzer Zeit mit geringem Energieaufwand prozesssicher auszuhärten. Das flächige Heizelement dient aber einerseits dazu, die Klebeschicht auf die notwendige Härtungstemperatur zu wärmen, andererseits ermöglicht die Messung der Temperatur des Heizelementes und damit direkt des umgebenden Klebstoffes, also die Messung innerhalb der Klebschicht, dass der Härtungsprozess sehr präzise geregelt werden kann.

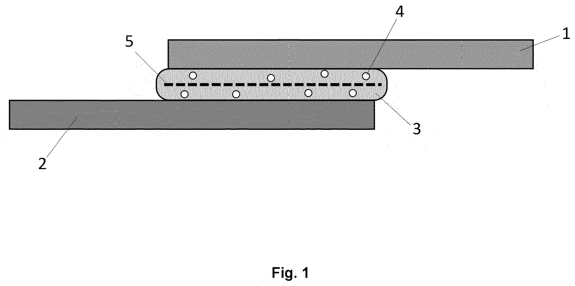

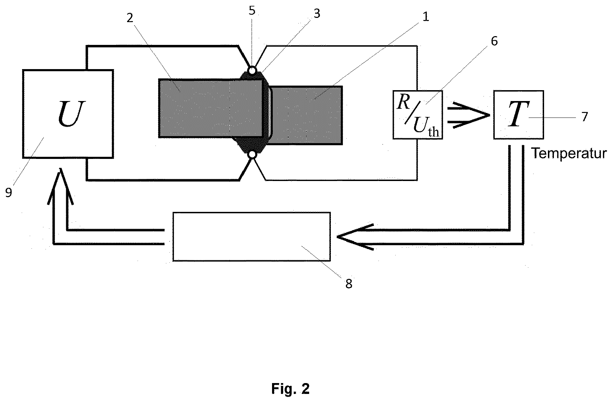

Schematisch ist dies in der Abbildung 1 und Abbildung 2 dargestellt. Dies wird weiter unten noch näher erläutert.

Im Sinne der Erfindung erfolgt die Messung der Temperatur des Klebstoffes durch die Bestimmung des Widerstandes des Heizelementes.

Dabei wird der Widerstand bestimmt über Messung der Spannung und Stromstärke, mit einer Zeitdifferenz zwischen Stromstärke-und Spannungsmessung von ≤10 ms, bevorzugt ≤ 1 ms, weiter bevorzugt ≤100 µs und besonders bevorzugt ≤ 10 µs.

Als Alternative zur Temperaturmessung ist es möglich, die Temperatur aus einem Kontakt zweier unterschiedlicher Metalle im Heizelement oder durch Kontakt eines weiteren Metalls mit dem Heizelement und Ausnutzen der dabei entstehenden Thermospannung zu bestimmen, da die Thermospannung im Wesentlichen proportional zur Temperatur ist.

Da die Wärme über das Heizelement direkt in den Klebstoff eingebracht wird, erfolgt die Erwärmung mit maximaler Effizienz. Für eine Klebeverbindung mit einer typischen Querschnittsfläche von einigen Quadratzentimetern ist abhängig vom Wärmeableitungsvermögen der Fügeteile mit einer elektrischen Leistungsaufnahme von nur 10 bis 100 Watt zu rechnen. Nach der Härtung verbleibt nach Durchführung des erfindungsgemäßen Verfahrens das Heizelement in der Klebfuge. Versuche zeigen aber, dass sich mit dem Verfahren Verbundfestigkeiten erreichen lassen (≥10 MPa), die für strukturelle Klebverbindungen ausreichend sind.

Dadurch, dass in die Temperatur des Heizelementes und damit des das Element umgebenden Klebstoffes *in situ* gemessen wird, ist es möglich, eine optimale Regelung des Aufheiz- und Heizprozesses zu gewährleisten. Dies ist insbesondere möglich und als bevorzugte Variante zu sehen, wenn die elektrische Leistung, mit der das Heizelement beaufschlagt wird, in Abhängigkeit von einer Zeittemperaturkurve erfolgt.

Dabei ist es bevorzugt, dass die Steuerung der elektrischen Leistung mit einer maximalen Verzögerung von ≤ 1000 ms, bevorzugt ≤ 500 ms, weiterbevorzugt ≤ 250 ms erfolgt.

Bevorzugt erfolgt die Steuerung der elektrischen Leistung in Abhängigkeit eines Temperatur-Widerstand-Datensatzes, der für das eingesetzte Heizelement Material-geometrisch spezifische Daten umfasst.

Die materialspezifischen Daten können zum Beispiel über seperate Messungen des Widerstandes in Abhängigeit zur Temperatur ermittelt werden, oder ggf. auch der Fachliteratur entnommen werden.

Wie bereits oben angedeutet, ist es bevorzugt, dass der zu verwendende thermisch aktivierbare Klebstoff bei Raumtemperatur fest ist. Hierdurch ist es besonders gut möglich, das erfindungsgemäß einzusetzende Heizelement dauerhaft in den (noch nicht aktivierten) Klebstoff einzubringen. Grundsätzlich ist es aber auch möglich, das erfindungsgemäß einzusetzende Heizelement mit einem konventionellen Klebstoff in flüssiger Form einzusetzen, indem das Element direkt vor dem Fügen in die noch flüssige Klebschicht eingelegt wird.

Mit einem festen Klebstoff ist es zusätzlich möglich, eines der Fügeelemente (oder sogar beide Fügeelemente) für eine Fügung vorzubereiten, indem der noch nicht aktivierte Klebstoff, bevorzugt bereits mit integriertem flächigen Heizelement - auf dem Fügeelement wie zum Beispiel einem Bolzen vorappliziert in Form einer Beschichtung sein kann.

Dadurch erhält der Endanwender ein hohes Maß an Funktionsintegration (Bauteil, Klebstoff und Wärmequelle für die Aushärtung bilden eine Einheit), die nur noch durch entsprechende Kontakte für die Beaufschlagung mit elektrischer Energie zur Erwärmung kontaktiert werden muss, sodass eine einfache und sicher zu handhabende Lösung für ein Fertigungsprozess besteht.

Vorteile des erfindungsgemäßen Verfahrens, insbesondere in seinen bevorzugten Varianten, bestehen darin, dass eine Klebverbindung durch besonders energieschonende Erwärmung des Klebstoffes von innen entsteht. Gleichzeitig kann durch parallele *in situ* Messung der Temperatur die Energiezufuhr von der Temperatur abhängig geregelt werden, sodass ein enger Temperaturkorridor beim Aufheizen und Erwärmen des Klebstoffes eingehalten werden kann. Gleichzeitig erlaubt das erfindungsgemäße Verfahren eine schnelle Aktivierung durch schnelle Erwärmung und damit auch eine schnelle nachfolgende Aushärtung des Klebstoffes, wobei der Energiebedarf wie vorgenannt gering bleibt.

In diesem Zusammenhang ist es bevorzugt, dass die Steuerung der elektrischen Leistung mit einer maximalen Verzögerung von ≤ 1000 ms, bevorzugt ≤ 500 ms und weiter bevorzugt ≤ 250 ms erfolgt.

Durch diese feine Steuerung ist es möglich, den Temperaturkorridor besonders genau einzuhalten.

Der Einsatz des flächigen Heizelementes bewirkt dabei eine gute Wärmeverteilung in den zu aktivierenden Klebstoff. Dadurch, dass das einzusetzende Heizelement gleichzeitig als Sensor für die Temperatur des Klebstoffes verwendet wird, kann der Temperaturwert besonders genau bestimmt werden und bietet eine ideale Grundlage für die Regelung der Energiezufuhr. Gegenüber der konventionellen induktiven Härtung von entsprechenden Klebmaterialien, die im Regelfall ohne Temperaturerfassung auskommt und nach einem feststehenden Zeit-/Leistungsprogramm abläuft, besteht die Möglichkeit, jederzeit nach zu regeln und so hohe Prozesssicherheit zu gewährleisten und den Energieverbrauch klein zu halten. Konventionelle durch induktive Erwärmung ausgeführte Härtung von thermisch aktivierbaren Klebstoffen müssen dagegen für jede Bauteilgeometrie, die entsprechenden Bauteilmassen, die entsprechenden Wärmeleitfähigkeiten und weitere stoff- und situationsbedingte Maßnahmen berücksichtigen und so das Zeit-/Leistungsprogramm komplett neu aufgebaut werden. Ferner muss bei ungeregeltem Erwärmen mit Sicherheitsfaktoren gearbeitet werden, sodass nicht die maximal möglichen Erwärmungsraten erreicht werden.

Das erfindungsgemäße Verfahren ermöglicht durch die Integration von Bauteil, Klebstoff, Heizelement und gleichzeitiger Temperaturmessung ein sehr schnelles Fügen von Bauteilen bei hoher Prozesssicherheit. Die durch das zusätzliche Heizelement geringfügig steigenden Bauteilkosten werden durch den geringen Investitionsbedarf für die Fügeanlage, reduzierte Energiekosten und schnellere Taktzeiten kompensiert.

Ferner ist durch die genaue Temperatursteuerung auch eine Reihe von verhältnismäßig temperaturempfindlichen Fügematerialien zugänglich, da die Temperatursteuerung so genau gewährleistet ist.

Es kann im Sinne der Erfindung bevorzugt sein, dass die Beaufschlagung des Heizelements nicht durch ein Batterieladegerät mit Strombegrenzungsschaltung ist. Ein solches Gerät ist in der Steuerungsgenauigkeit verbesserungsbedürftig, da keine differenzierte Nachsteuerung möglich ist.

Bevorzugt ist daher im erfindungsgemäßen Verfahren der Einsatz von Kunststoffen und/oder anderen nicht metallischen Werkstoffen, insbesondere für Fügeelemente, ausgewählt aus der Gruppe bestehend aus Bolzen, Winkel, Platte, Halter und Beschlag. Teil der Erfindung ist auch ein erfindungsgemäßer Verbund aus zwei Fügeelementen, hergestellt oder herstellbar nach einem erfindungsgemäßen Verfahren.

Zur Erfindung gehört ferner eine Anordnung, gemäß der Merkmale des Anspruchs 10.

Die Anordnung kann auch einen Handapparat umfassen, der in der Lage ist, das Heizelement kontaktieren und mit elektrischer Energie zu beaufschlagen.

Nachfolgend werden noch eine Reihe von Hinweisen für das erfindungsgemäße Verfahren gegeben:
Die Figur 1 stellt eine schematische Darstellung eines erfindungsgemäßen Verbundes aus zwei Fügeelementen dar. Dabei haben die Bezugszeichen folgende Bedeutung:
   1 Fügeelement
   2 Fügeelement
   3 Thermisch aktivierbarer Klebstoff
   4 Abstandshalter (optional)
   5 Heizelement
   Wie ersichtlich ist, ist es möglich und in vielen Fällen bevorzugt, dass in den thermisch aktivierbaren Klebstoff Abstandshalter eingefügt werden. Diese haben die Funktion, auch für elastische aktivierbare Klebstoffe einen gewünschten Abstand zwischen dem Fügeelement 1 und dem Fügeelement 2 zu gewährleisten. Bevorzugt können die Abstandshalter wie folgt ausgestaltet sein: Kugeln, Fasern, Faserabschnitte, Gewebe, Gelege, Füllstoffpartikel mit regelmäßiger oder unregelmäßiger Geometrie. Bevorzugt bestehen die Abstandhalter aus den Materialien Glas, Keramik, Mineralien oder Polymerwerkstoffen.
Die Figur 2 zeigt eine schematische Darstellung eines bevorzugten erfindungsgemäßen Verfahrens dar: Dabei bedeuten die Bezugszeichen
   1 Fügeelement
   2 Fügeelement
   3 Klebstoff
   5 Flächiges Heizelement
   6 Widerstandsmesseinheit
   7 Einheit zur Ermittlung der Temperatur
   8 Regler
   9 Steuereinheit für die Heizspannung
   Das Heizelement 5 ist als dünnes Flächengebilde (Netz, Gewebe, Folie) ausgebildet und in der Mitte des Klebstoffes platziert. Es erwärmt sich aufgrund seines ohmschen Widerstandes bei Anlegung einer elektrischen Leistung, deren Höhe in diesem Falle über die elektrische Spannung gesteuert wird. Die Temperaturmessung erfolgt über die Bestimmung des Widerstandes mit der Einheit 6, die die Widerstandsdaten an die Einheit 7 zur Bestimmung der Temperatur übergibt. Die Einheit 7 zur Bestimmung der Temperatur verfügt über materialspezifische Daten, mittels derer die Ist-Temperatur im Heizelement in Abhängigkeit vom Widerstand bestimmt wird. Über den Regler 8 wird die Spannung gesteuert, sodass die Erwärmung in einem vorbestimmten Maximum/Minimum Temperaturkorridor in Abhängigkeit von der Zeit erfolgt.
   Das bevorzugte Klebstoffmaterial ist bei Raumtemperatur fest. Es kann bezüglich seiner Härte und Klebrigkeit im unausgehärteten Zustand durch die Wahl seiner Zusammensetzung an die geplante Anwendung angepasst werden. Gleiches gilt für die Härtungstemperatur und -geschwindigkeit, sowie die erreichbare Endfestigkeit. Als mögliche spezifische Adaption an den Schnellhärtungsprozess durch das in die Klebschicht eingebettete Heizelement kann bevorzugt die Gleichmäßigkeit der Durchwärmung des Klebstoffs durch den Zusatz wärmeleitfähiger Füllstoffe (z.B. Aluminiumoxid) verbessert werden.
   Für den Aufbau des Heizelements kommen eine Anzahl unterschiedlicher Materialien oder Materialkombinationen in Frage. Einige Beispiele sind in Fig. 3 gezeigt.
Figur 3 stellt mögliche Ausführungen des erfindungsgemäß einzusetzenden Heizelementes dar:
   a) Metallnetz oder Streckmetall
   b) Metallfolie, Graphitfolie, Kohlefasergewebe oder Kohlefaser/Polymerfaser-Mischgewebe
   c) und d) Strukturierte Graphitfolie oder Metallfolie
   e) Folie für Klebeverbindung mit kreisförmigem Querschnitt (strukturiert)
   f) Strukturierte Graphit- oder Metallfolie mit getrenntem Sensorelement (Widerstandssensor 10 innenliegend)
   g) Ein flächiges Heizelement, zum Beispiel in Form einer Metallfolie, der Temperatursensor ist über einen Thermokontakt zwischen der Metallfolie und einem Draht 11 ausgeformt.

In der Figur 3 wird innerhalb des Bereiches der gestrichelten Linie jeweils der Klebstoff beidseitig aufgebracht. Der Bereich außerhalb dient der elektrischen Kontaktierung.

Als Heizelement eignen sich im Prinzip alle Materialien mit hinreichender elektrischer Leitfähigkeit. Der optimale spezifische Widerstand des Materials wird durch die Überlappungsfläche der Klebung und die Dicke des Heizelements festgelegt. Aus praktischen Erwägungen sollte der Widerstand des Heizelementes im Bereich von 100 mOhm bis 1 kOhm liegen. Bei kleineren Widerstände lässt sich die notwendige Heizleistung nur durch hohe Stromstärken erreichen. Dies erfordert elektrische Zuleitungen mit großem Querschnitt und bedingt die Gefahr einer Überhitzung an den elektrischen Kontaktstellen. Umgekehrt erfordern hohe Widerstände hohe, bei Berührung gefährliche, Spannungen. Als Materialien für das Heizelement kommen bevorzugt in Frage: Edelstahl, Konstantan, Graphit, Kohlefasern. Mögliche weitere Kandidaten sind elektrisch leitfähige Polymere oder polymerbasierte Materialkomposite, die durch Zusatz von Füllstoffen elektrisch leitfähig gemacht wurden. Als polymere Basis kann dabei auch ein PASA-Material (thermisch aktivierbarer Klebstoff) dienen.

Eingesetzt werden die Materialien bevorzugt als dünne Folien (Fig. 3b), Gewebe oder Netze (Fig. 3a). Netze weisen gegenüber Folien aus dem gleichem Material oft einen höheren elektrischen Widerstand auf, was besonders bei Materialien mit niedrigem spezifischen Widerstand von Vorteil sein kann. Außerdem werden Netze vom Klebstoff durchdrungen und wirken daher weniger stark als Fremdkörper in der Klebverbindung. Ähnliche Effekte lassen sich auch für Metallfolien erzielen, wenn diese gelocht (Fig. 3c) oder mäanderförmig strukturiert werden (Fig. 3d und 3e).

Eine Temperaturmessung kann mit Hilfe von drei unterschiedlichen Verfahren realisiert werden, wobei nur das erstgenannte erfindungsgemäß ist:
1. Das Heizelement wird über eine Widerstandsmessung gleichzeitig als Temperatursensor genutzt. (Fig. 3a-e).
   Der Vorteil dieser Lösung besteht darin, dass besonders einfach aufgebaute, kombinierte Heiz-/Sensorelemente erhalten werden. Allerdings kann bei Heizelementen mit niedrigem Widerstand die genaue Bestimmung des Widerstands, wie sie für die Temperaturmessung notwendig ist, schwierig sein. Außerdem scheiden bestimmte Materialien z.B. Konstantan für diese Möglichkeit aus, weil ihr elektrischer Widerstand einen zu geringen Temperaturkoeffizienten aufweist.
2. Heizelement und Sensorelement sind entkoppelt. Die Temperatur wird weiterhin aus dem Widerstand des Sensorelements ermittelt (Fig. 3f)
3. Zur Temperaturmessung dient die Thermospannung an einem Materialkontakt zweier unterschiedlicher Metalle (Fig. 3g). Bei einem der Metalle kann es sich das Material des Heizelements handeln (Beispiel: Ein Heizelement aus Konstantan mit einer Folie oder einem Draht aus Nickel verschweißt). Heizelement und Thermoelement können aber auch völlig voneinander getrennt werden. Klebstoff und Heizelement werden vor der eigentlichen Anwendung bevorzugt zu einer Einheit verbunden. Dies kann durch Aufpressen oder Aufwalzen des Klebstoffmaterials auf das Heizelement erreicht werden. Dabei sollte das Heizelement bevorzugt mittig im Klebstoff positioniert werden.

Als Gesamtdicke für den Verbund aus Klebstoff und Heiz-/Sensorelement sind 0,25 - 1 mm bevorzugt. Zur Festlegung einer Mindestklebschichtdicke und um im Falle metallischer Fügeteile einen Kontakt zwischen Fügeteil und Heiz-/Sensorelement zu verhindern, können dem Klebstoff Abstandshalter (z.B. Glaskugeln) beigegeben werden.

Der Verbund kann entweder als freitragende Folie verwendet werden oder er wird auf einen der Fügepartner vorbeschichtet.

Für kleinere mit Klebstoff vorbeschichtete Bauteile (z.B. Bolzen oder sonstige Befestigungselemente) ist es dem Fachmann möglich, ein kompaktes Gerät zu entwickeln, mit dem sich alle Schritte des Klebprozesses
- Halterung und Positionierung der Bauteile
- temperaturgeregelte schnelle Aushärtung
- Entfernung von über die Klebung überstehenden Kontaktpunkte des Heiz/Sensorelements

in einem Arbeitsgang ausführen lassen. Eine solche "Klebepistole" könnte durch den Einsatz von Lithium-Ionen-Batterien als Energiequelle netzunabhängig sein und sich dann auch für den handwerklichen oder den do-it-yourself-Bereich eignen.

### Beispiele:

### Beispiel 1

### Bestimmung des Temperaturkoeffizienten des elektrischen Widerstands für eine Edelstahlfolie

Eine Edelstahlfolie (Stahl: 1.4310, Breite: 12,7 mm, Länge: 25 mm, Dicke: 0,01 mm) wurde analog zu Fig. 3c mit Löchern versehen (Lochdurchmesser: 0,5 mm). Der Widerstand der Folie wurde mit Hilfe einer 4-Draht-Messung im Temperaturbereich zwischen Raumtemperatur und 200 °C gemessen. Das verwendete Messgerät (HP 34401A) hatte eine Auflösung von 0,1 mOhm.

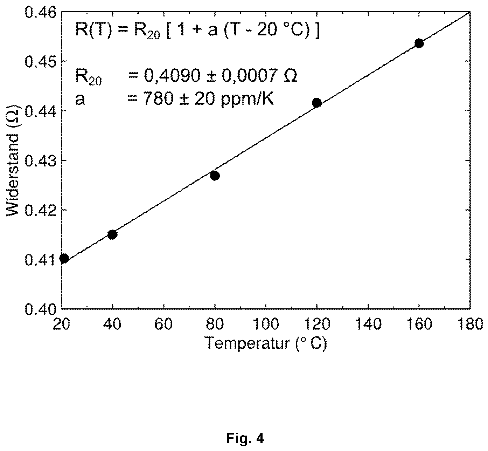

Durch die Messung wurde der lineare Temperaturkoeffizient des elektrischen Widerstands zu 780±20 ppm/K bestimmt (vergleiche auch Fig. 4: Änderung des Widerstandes einer Edelstahlfolie (Stahl: 1.4301) mit der Temperatur.). Mit der gegebenen Anordnung aus Messgerät und Stahlfolie lässt sich daher eine Temperaturmessung mit einer Genauigkeit von ±3 K durchführen.

### Beispiel 2

### Schnellerwärmung einer Test-Anordnung aus Heizfolie und PTFE-Substraten

Eine Edelstahlfolie wie unter Beispiel 1 beschrieben wurde zwischen zwei Platten aus PTFE (25 x 25 x 4 mm³) positioniert. Im direkten Kontakt mit der Edelstahlfolie befand sich ein Thermoelement Typ K zur Temperaturerfassung. Die Folie wurde durch ein regelbares Netzteil (Delta Elektronika SM7020) mit Strom versorgt. Die Maximalstromstärke wurde dabei auf 7,5 A begrenzt. Zur Temperaturerfassung und Regelung der Heizleistung wurde ein am Fraunhofer IFAM entwickelter Controller (IFAM IHC) eingesetzt.

Für den Versuch zur Schnellerwärmung wurde eine Solltemperatur von Tₛₒₗₗ = 180 °C vorgegeben. Insgesamt wurde die Temperatur über einen Zeitraum von 180 s aufgezeichnet, davon war die Heizung nur die ersten 60 s aktiviert.

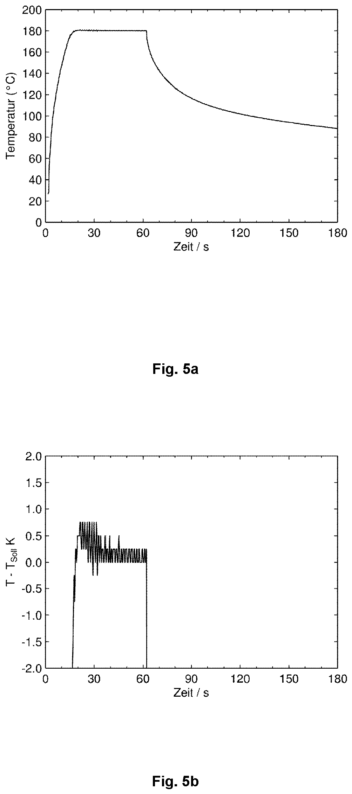

Beim Versuch wurde die vorgegebene Solltemperatur innerhalb von 20 Sekunden erreicht, was einer mittleren Aufheizgeschwindigkeit von ca. 8 K/s entspricht (vergleiche Fig. 5a: Temperaturkurve beim geregelten Aufheizen der Testanordnung Die Ziel-Temperatur lag bei 180 °C. Nach 60 Sekunden wurde die Heizung abgeschaltet). Die Edelstahlfolie wurde mit einer maximalen Heizleistung von ca. 20 W beaufschlagt. In der stationären Phase des Versuchs wurde die Temperatur mit großer Genauigkeit gehalten (Fig. 5b: Abweichungen der Ist-Temperatur von der Soll-Temperatur). Die maximale Abweichung von der Solltemperatur lag unter 1 K.

### Beispiel 3

### Schnellaushärtung von Klebproben (Temperaturregelung über Thermoelement)

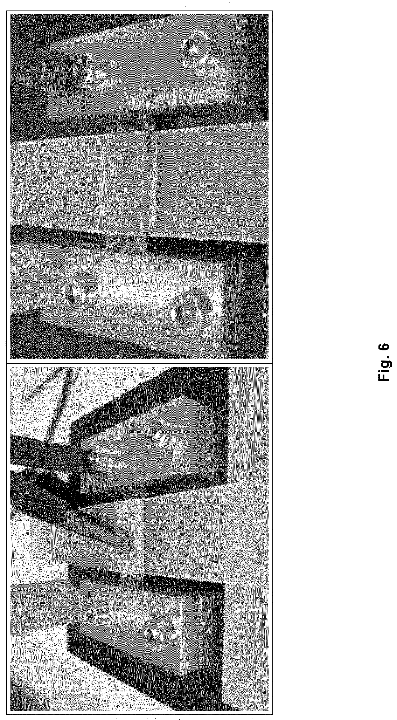

Es wurden Klebproben in Zug-Scher-Geometrie angelehnt an DIN EN 1465 gefertigt. Dabei wurden jeweils Substrate aus Glas-Faser verstärktem Epoxidharz (GFK) verwendet. Als Klebstoff diente IFAM PASA-EH1, der bei Raumtemperatur die Konsistenz einer plastischen Folie mit geringer Klebrigkeit aufweist. Für die Schnellaushärtung wurden aus dem Klebstoff Patches im Format 25 x 12,5 x 0,5 mm³ mit einer gelochten Edelstahlfolie und einem Thermoelement als Mittellage gefertigt. Diese Patches wurden wie in Fig. 6 (Zugscher-Probe vor und nach der Schnellaushärtung des Klebstoffs durch elektrische Widerstandsheizung) gezeigt im Überlappungsbereich (25 x 12,5 mm²) der GFK-Fügeteile platziert. Die Aushärtung durch Widerstandserwärmung erfolgte in der gleichen Testanordnung und mit dem gleichen Temperaturprogramm wie unter Beispiel 2 beschrieben. Als Kontrolle wurden Zug-Scherproben mit dem Klebstoff PASA EH1 ohne Heiz/Sensorelement konventionell im Umluftofen ausgehärtet (30 Minuten bei 180 °C).

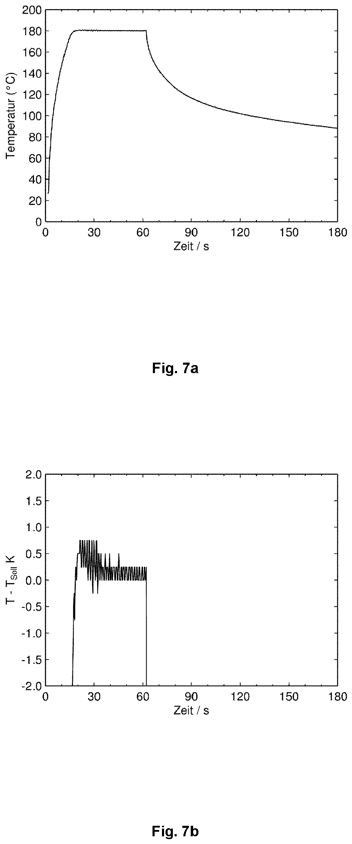

Beim Härtungsversuch wurde die Solltemperatur von 180 °C ebenfalls nach ca. 20 Sekunden erreicht und während der stationären Phase des Härtungszyklus mit einer Genauigkeit von ±1 K gehalten (Fig. 7a: Temperaturverlauf bei der Schnellhärtung des Klebstoffs PASA EH1 zwischen GFK-Fügeteilen, Fig. 7b: Abweichung von der Solltemperatur (180 °C)). Durch die Erwärmung verflüssigte sich der Klebstoff zunächst und trat teilweise aus dem Klebspalt aus. Nach Entnahme der Zug-Scher-Probe aus der Halterung war der Klebstoff augenscheinlich vollständig ausgehärtet. Dies gilt auch für die aus dem Klebspalt ausgetretenen Bereiche, die in keinem so intensiven Wärmekontakt zum Heizelement stehen wie das Material in der Klebfuge. Blasenbildung im Klebstoff und Ausgasung flüchtiger Komponenten (Rauchentwicklung) trat nur in sehr geringem Ausmaß auf.

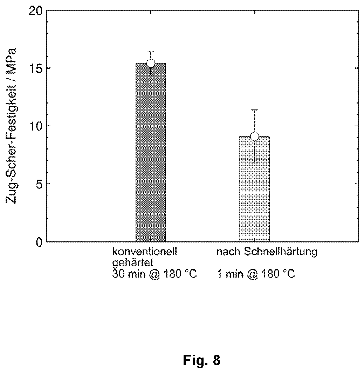

Der Klebstoff erreichte bei konventioneller Ofenhärtung eine Zug-Scher-Festigkeit von ca. 15 MPa (Fig. 8: Zug-Scher-Festigkeiten des Klebstoffs PASA EH1 zwischen GFK-Fügeteilen nach konventioneller und nach Schnellhärtung). Die Festigkeit der durch elektrische Widerstandserwärmung schnell ausgehärteten Proben lag zwar mit ca. 10 MPa merklich unter diesem Wert, die Festigkeit reicht aber für viele Anwendungen (auch für strukturelle Verbindungen) bereits aus. Der Grund für die verminderte Festigkeit ist wahrscheinlich nicht in den unterschiedlichen Aushärtungsbedingungen zu suchen, sondern darin, dass in den beschriebenen Versuchen verwendete Temperatursensor durch einen relativ dicken Zuleitungsdraht (Durchmesser ca. 0,5 mm) die Struktur der Klebfuge schwächt. Hier bestehen durch eine bessere Integration von Heizelement und Sensor noch Möglichkeiten zur Verbesserung.

### Beispiel 4

### Schnellaushärtung von zwei unterschiedlichen Klebstoffen

### (Temperaturregelung über die Widerstandsänderung im Heizelement)

Die Leistungsfähigkeit der Schnellhärtung über Widerstandserwärmung der Klebfuge sollte am Beispiel von zwei Klebstoffen mit sehr unterschiedlichem Eigenschaftsprofil demonstriert werden:
*Klebstoff 1:* Der Klebstoff AF 163_2U (3M) liegt bei Raumtemperatur als flexible, im wesentliche nicht-klebrige Folie vor, die durch Erwärmen zunächst aufschmilzt und dabei zu einem duromeren Material aushärtet. Der Klebstoff stellt ein latentes 1-Komponenten-System dar, d.h. der Klebstoff enthält sowohl ein Epoxidharz als auch den notwendigen Härter in vorgemischter Form. Die Aushärtung findet bei normaler Umgebungstemperatur nur sehr langsam statt (Latenz), so dass die Klebstofffolie bei Raumtemperatur einige Stunden gehandhabt werden kann. Die Lagerung über längere Zeiträume muss hingegen gekühlt bei -18 °C erfolgen. Der Klebstoff ist für eine thermische Aushärtung vorgesehen (z.B. 90 min im Umluftofen bei 120 °C).
*Klebstoff 2:* Der Klebstoff EC 7256 (3M) härtet nach Vermischen der beiden Komponenten bereits bei Raumtemperatur in kurzer Zeit aus (Verarbeitungszeit laut techn. Datenblatt: 12 min, Handhabungsfestigkeit: ca. 80 min). Die Aushärtung kann durch Erwärmen beschleunigt werden.

### Allgemeine experimentelle Methoden

Die Verbundfestigkeiten von geklebten Proben wurden durch Zugscherversuche in Anlehnung an DIN EN 1465 gemessen. Für beide Klebstoffsysteme wurden dabei die Festigkeiten von konventionell in Ofen gehärteten Proben mit denen von schnell gehärteten Proben verglichen.
- Fügeteile: Glasfaserverstärktes Epoxid (GFK) (100 x 25 mm²)
- Vorbereitung: Oberflächliches Anschleifen der Fügeteile, danach Reinigung mit 2-Propanol
- Ofenhärtung: 2 h bei 120 °C im Umluftofen
- Zug-Scher-Prüfung bei Raumtemperatur, Prüfgeschwindigkeit: 10 mm/min, je 5 Prüfkörper

### Heizelement

Als Heizelement zur elektrischen Widerstandserwärmung der Klebfuge wurde ein Laserperforierter Edelstreifen (Legierung: 1.4310) mit einer Dicke von 10 µm, analog zu Abb. 2c, verwendet. Das Heizelement besitzt bei Raumtemperatur einen typischen Widerstand von 0,5 Ohm. Das Heizelement wurde mittig in die Klebschichten eingebettet.

### Messung der Temperatur in der Klebfuge über den Widerstand des Heizelements

Zur Messung der Temperatur in der Klebfuge wird die Temperaturabhängigkeit des elektrischen Widerstandes des Heizstreifens ausgenutzt, die im interessierenden Temperaturbereich linear ist (vgl. Fig. 4: Änderung des Widerstandes einer Edelstahlfolie (Stahl: 1.4301) mit der Temperatur.). Die Widerstandsmessung selbst erfolgt durch simultane Messung der am Heizstreifen anliegenden Spannung und des fließenden Stromes (vgl. Abb. 1b), mit Hilfe von zwei hochauflösenden 24-bit-Analog-Digitalwandlern. Im Endeffekt ermöglicht dies eine Temperaturmessung mit einer Genauigkeit von ca. 1 K (Tabelle 1).

**Tabelle 1:**

| Kennwerte zur Datenerfassung von Strom, Spannung, Widerstand des Heizelements und Temperatur. | | |
|---|---|---|
| rms-Genauigkeit Spannungsmessung | 100 | µV |
| rms-Genauigkeit Strommesung | 200 | µA |
| rms-Genauigkeit der Widerstandsmessung | 300 | µOhm |
| rms-Genauigkeit der Temperaturmessung | 0,9 | K |
| Datenabtastrate | 4 | Hz |

### Temperaturregelung

Vor dem eigentlichen Heizlauf wurde jedes Heizelement individuell gegen ein Thermoelement kalibriert. Dabei handelte es sich um eine 1-Punkt-Kalibrierung bei Raumtemperatur. Die Steigung der Widerstandskennlinie des Heizelements wurde in einer vorangehenden Messung ermittelt und danach als Materialkonstante behandelt, die für jedes der eingesetzten Heizelement gültig ist.

Die über das Heizelement gemessene Temperatur diente als Eingangsgröße für einen Regelkreis. Zur Regelung wurde eine Software PID-Regler eingesetzt, der eine Gleichspannungsquelle (Maximal-Spannung: 5 V, Maximal-Strom 10 A) ansteuerte.

Eine Besonderheit des eingesetzten Verfahrens zur Temperaturerfassung und Regelung besteht darin, dass die Basisgrößen für die Temperaturmessung (Strom und Spannung) absolut synchron gemessen werden. Dies ist wichtig, weil in der vorliegenden Anordnung das Heizelement gleichzeitig als Temperatursensor dient und Änderungen des Stromflusses keine Rückwirkungen auf die Widerstandsmessung haben dürfen. Bei nicht nicht synchroner Erfassung von Strom und Spannung, käme es zu großen systematischen Fehlern bei der Widerstands- und damit auch bei der Temperaturmessung. Dies gilt besonders bei schnellen zeitlichen Änderungen der Stellgröße (d.h. der Heizspannung), wie sie für eine effiziente und schnelle Regelung notwendig sind.

### Temperaturprogramm für die Schnellaushärtung der Klebstoffe

Das Temperaturprogramm für die Klebstoffaushärtung umfasste eine schnelle lineare Heizrampe, eine isotherme Aushärtephase und das nachfolgende Abkühlen ohne weiteren Energieeintrag durch das Heizelement. Die Parameter für die Aushärtung sind in Tabelle 2 zusammenfasst.

**Tabelle 2: Temperaturprogramme für die Schnellhärtung.**

| | Heizrampe | isotherme Phase |
|---|---|---|
| Klebstoff 1 | 30 K/s (Dauer <10 s) | 280 °C (Dauer 60 s) |
| Klebstoff 2 | 20 K/s (Dauer <10 s) | 180 °C (Dauer 60 s) |

### Durchführung der Schnellhärtung

Zur Halterung und elektrischen Kontaktierung wurde die in Beispiel 3 beschriebene Klebvorrichtung eingesetzt. Um zusätzliche Informationen über die Durchwärmung der Fügeteile zu erhalten, wurde ein Thermoelement Typ K auf der Oberfläche der Fügeteile im Bereich der Klebung angebracht.

### Ergebnisse (Temperaturverlauf in der Klebfuge und an der Fügeteiloberfläche)

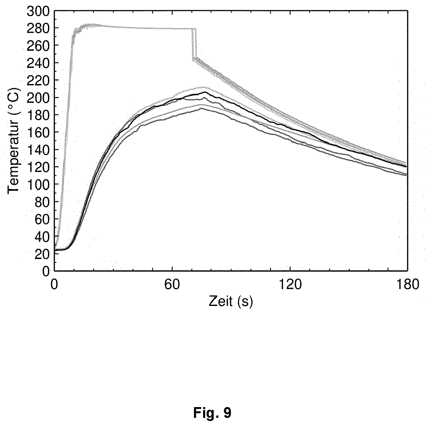

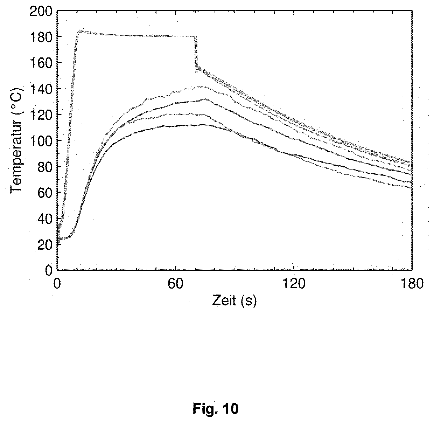

Die Fig. 9 und 10 zeigen die Temperaturverläufe in der Klebfuge und auf der Fügeteiloberfläche bei der Aushärtung der beiden Modell-Klebstoffe.
- Fig. 9:: Temperatur/Zeit-Diagramm für 5 Aushärtungsläufe des Folienklebstoffs AF 163_2U. Die Solltemperatur für die Aushärtung des Klebstoffs betrug 280 °C. Hell dargestellte Temperaturkurven wurden über das Heizelement in der Mitte der Klebschicht gemessen, dunkel dargestellte Kurven mit Hilfe eines Thermoelements an der Oberfläche eines Fügeteils.
- Fig. 10:: Temperatur/Zeit-Diagramm für 4 Aushärtungsläufe des 2-K-Epoxidklebstoffs 3M Scotchweld EC 7256. Die Solltemperatur für die Aushärtung des Klebstoffs betrug 180 °C. Hell dargestellte Temperaturkurven wurden über das Heizelement in der Mitte der Klebschicht gemessen, dunkel dargestellte Kurven mit Hilfe eines Thermoelements an der Oberfläche eines Fügeteils.

Es ist klar zu erkennen, wie schnell das Temperatursignal aus der Klebfuge auf die durch elektrische Widerstandsheizung eingebrachte Energie reagiert. Die Temperatur auf der Fügeteiloberfläche folgt dem mit einer deutlichen Zeitverzögerung. Für eine Regelung schneller Aufheizprozesse ist die direkte Temperaturmessung in der Klebfuge daher ideal. Eine Regelung über die Oberflächentemperatur ist hingegen mit einer deutlichen Totzeit zwischen der Änderung der Heizleistung und der Temperaturantwort verbunden. Für die Schnellhärtung ist eine Regelung, die sich nur auf die Oberflächentemperatur der Fügeteile stützt, daher nicht sinnvoll.

Beim Vergleich der Aushärtungsläufe für die verschiedenen Klebproben zeigt sich, dass das gewünschte Temperaturprofil sehr präzise und reproduzierbar eingehalten wird. Demgegenüber treten in der Öberflächentemperatur deutliche Abweichungen auf, die darauf zurückzuführen sind, dass der Wärmeabfluss an die Umgebung schlecht kontrollierbar ist (er wird zum Beispiel durch die herrschende Luftströmung bestimmt). Dieses Problem ist vor allem bei hohen Härtungstemperaturen relevant, weil hier große Unterschiede zur Umgebungstemperatur bestehen.

Beim langsamen Abkühlen der Proben nähern sich die Temperaturen von Klebfuge und Oberfläche immer weiter an. Dies ist auch so zu erwarten, weil über die Zeit ein Temperaturausgleich in der geklebten Probe stattfindet.

### Ergebnisse (Zug-Scher-Prüfung der Klebproben nach schneller Aushärtung)

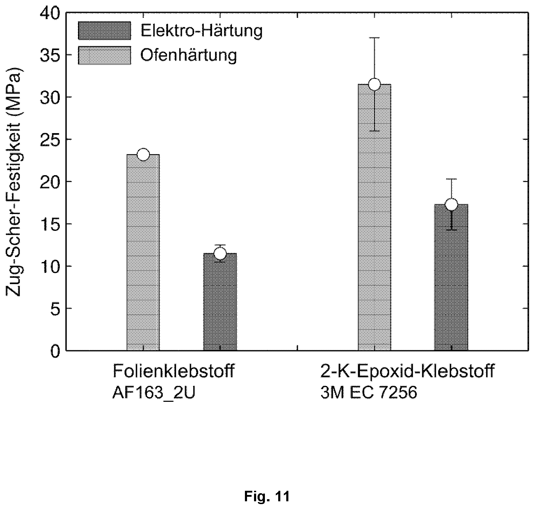

Beide untersuchte Modellklebstoffe erreichen nach konventioneller Aushärtung im Umluftofen strukturelle Festigkeiten, die sie für den Einsatz im konstruktiven Bereich geeignet machen. Klebstoff 1 erreichte eine Zug-Scher-Festigkeit von 23 MPa, Klebstoff 2 eine Festigkeit von 33 MPa. Im letzteren Fall stellte die Festigkeit des GFK-Substrats den limitierenden Faktor für die Verbundfestigkeit dar (Fig. 11: Verbundfestigkeiten im Zug-Scher-Versuch für zwei unterschiedliche Klebstoffsysteme nach konventioneller Ofenhärtung bzw. nach elektrischer Schnellhärtung).

Unter den Bedingungen der Schnellhärtung ergaben sich Klebverbindungen mit Festigkeiten, die zwar merklich unterhalb der konventionell gehärteten Proben lagen, die aber mit 11 MPa (Klebstoff 1) und 17 MPa (Klebstoff 2) für viele strukturelle Aufgaben ausreichend sind.

Die Analyse des Bruchbildes legt nahe, dass der Festigkeitsverlust zumindest zum Teil durch das eingelegte Heizelement verursacht wird. Bei allen Klebungen wurde ein Adhäsionsversagen zur perforierten Edelstahlfolie beobachtet. Hier ist wahrscheinlich noch eine Verbesserung möglich, weil die für die Versuche verwendeten Edelstahlfolien nicht speziell vorbehandelt wurden und Edelstahl ohne Vorbehandlung als schwer zu klebendes Material gilt.

Die Klebproben zeigten trotz der z.T. sehr hohen Aushärtungstemperaturen keinerlei visuell erkennbare Anzeichen von Zersetzung des Klebstoffs oder Fügeteile (Verfärbung oder Blasenbildung). Dies zeigt, dass mit der eingesetzten Methode eine sehr gleichmäßige und kontrollierte Erwärmung der Klebschicht möglich ist.

### Zusammenfassung der Ergebnisse

Durch geregelte elektrische Widerstandserwärmung konnten zwei unterschiedliche Modellklebstoffe innerhalb von 70 Sekunden ausgehärtet werden. Die Klebstoffe erreichten dabei strukturelle Festigkeiten > 10 MPa. Die Regelung ermöglichte sehr hohe Erwärmungsraten und eine reproduzierbare Einhaltung des vorgegebenen Temperaturprofils. Die Versuche zeigen, das er mit Hilfe der neu entwickelten Elektronik zur Messdatenerfassung möglich ist, das zur Erwärmung der Klebschicht verwendete Heizelement gleichzeitig als präzisen und schnell reagierenden Temperatursensor einzusetzen. Zusätzliche Temperatur-Sensoren (z.B. Thermoelemente) können deshalb entfallen. Gegenüber der dem Stand der Technik entsprechenden Temperaturmessung an der Oberfläche der Fügepartner bietet die neue Methode den Vorteil einer wesentlich verkürzten Ansprechzeit. Dies ist die Grundvoraussetzung für eine kontrollierte Schnellhärtung von Klebstoffen.

## Patentansprüche

1. Verfahren zum Verbinden zweier Fügeelemente (1, 2), umfassend die Schritte:
a) Bereitstellen der zwei Fügeelemente (1, 2),
b) Bereitstellen eines thermisch aktivierbaren Klebstoffes (3),
c) Bereitstellen eines **als dünnes Flächengebilde ausgebildeten** Heizelementes (5)
d) Anordnen des Heizelements (5) **in der Mitte des** Klebstoffs (3),
e) Anordnen des Heizelementes (5) und des Klebstoffes (3) zwischen den Fügeelementen (1, 2),
f) Erwärmen des Klebstoffes (3) durch Beaufschlagung des Heizelementes (5) mit elektrischer Leistung unter gleichzeitiger Messung der Temperatur des Klebstoffes (3), wobei der Umfang der Beaufschlagung des Heizelementes (5) mit elektrischer Leistung abhängig von der gemessenen Temperatur gesteuert wird, wobei die Messung der Temperatur des Klebstoffes durch Bestimmung des Widerstandes des Heizelementes (5) erfolgt mit einer Widerstandsmesseinheit (6), die die Widerstandsdaten an eine Einheit zur Bestimmung der Temperatur (7) übergibt,
wobei die Einheit zur Bestimmung der Temperatur (7) über materialspezifische Daten verfügt, mittels derer die Ist-Temperatur im Heizelement in Abhängigkeit vom Widerstand bestimmt wird, und wobei über einen Regler (8) die Spannung gesteuert wird, sodass die Erwärmung in einem vorbestimmten Maximum/Minimum Temperaturkorridor in Abhängigkeit von der Zeit erfolgt,
**dadurch gekennzeichnet, dass** der Widerstand bestimmt wird über Messung der Spannung und Stromstärke, mit einer Zeitdifferenz zwischen Stromstärke und Spannungsmessung von ≤10 ms, bevorzugt ≤ 1 ms, weiter bevorzugt ≤100 µs und besonders bevorzugt ≤ 10 µs.

2. Verfahren nach Anspruch 1, wobei die Steuerung der elektrischen Leistung in Abhängigkeit eines Temperatur - Widerstand - Datensatzes erfolgt, der für das eingesetzte Heizelement material- und geometriespezifische Daten umfasst.

3. Verfahren nach Anspruch 2, wobei die zur Temperaturberechnung benötigten, geometrieabhängigen Kenndaten des Heizelementes (5) über eine automatische Widerstandsmessung, vor oder während der Erwärmung, ermittelt werden.

4. Verfahren nach einem der vorangehenden Ansprüche, wobei die Steuerung der elektrischen Leistung in Abhängigkeit einer Zeit - Temperaturkurve erfolgt.

5. Verfahren nach einem der vorangehenden Ansprüche, wobei die Steuerung der elektrischen Leistung mit einer maximalen Verzögerung von ≤ 1000 ms, bevorzugt ≤ 500 ms, weiter bevorzugt ≤ 250 ms erfolgt.

6. Verfahren nach einem der vorangehenden Ansprüche, wobei der Klebstoff (3) im nichtaktivierten Zustand fest ist.

7. Verfahren nach einem der Vorangehenden Ansprüche, wobei der Klebstoff (3) im ausgehärteten Zustand ein Duromer ist.

8. Verfahren nach einem der vorangehenden Ansprüche, wobei wenigstens eines der Fügeelemente (1, 2), bevorzugt beide Fügeelemente (1, 2) ein Kunststoff ist oder aus anderen nichtmetallischen Werkstoffen besteht.

9. Verfahren nach einem der vorangehenden Ansprüche, wobei wenigstens ein Fügeelement (1 oder 2) ausgewählt ist aus der Gruppe bestehend aus Bolzen, Winkel, Platte, Halter und Beschlag.

10. Anordnung, eingerichtet zur Durchführung eines Verfahrens nach einem der Ansprüche 1 - 9, umfassend
(i) Kontakte zum Kontaktieren eines Heizelementes (5) zur Beaufschlagung mit elektrischer Leistung,
(ii) einen thermisch aktivierbaren Klebstoff (3), in dem ein flächiges Heizelement (5), **das als dünnes Flächengebilde ausgebildet ist, in der Mitte** angeordnet ist und
(iii) eine Steuerungseinheit zur Steuerung der der elektrischen Leistung in Abhängigkeit von der Temperatur des Klebstoffes,
wobei die Anordnung derart konfiguriert ist, dass die Temperaturmessung über die Bestimmung des Widerstandes des flächigen Heizelementes (5) mit einer Widerstandsmesseinheit (6) erfolgt, die die Widerstandsdaten an eine Einheit zur Bestimmung der Temperatur (7) übergibt, wobei die Einheit zur Bestimmung der Temperatur (7) über materialspezifische Daten verfügt, mittels derer die Ist-Temperatur im Heizelement in Abhängigkeit vom Widerstand bestimmt wird, und wobei über einen Regler (8) die Spannung gesteuert wird, sodass die Erwärmung in einem vorbestimmten Maximum/Minimum Temperaturkorridor in Abhängigkeit von der Zeit erfolgt, **dadurch gekennzeichnet, dass** die Anordnung derart konfiguriert ist, dass der Widerstand über Messung der Spannung und Stromstärke, mit einer Zeitdifferenz zwischen Stromstärke-und Spannungsmessung von <10 ms, bevorzugt < 1 ms, weiter bevorzugt <100 µs und besonders bevorzugt < 10 µs, bestimmt wird.

## Claims

1. Method for connecting two joining elements (1, 2), comprising the steps of:
a) providing the two joining elements (1, 2),
b) providing a thermally activatable adhesive (3),
c) providing a heating element (5) formed as a thin sheet-like formation,
d) arranging the heating element (5) in the middle of the adhesive (3),
e) arranging the heating element (5) and the adhesive (3) between the joining elements (1, 2),
f) heating the adhesive (3) by applying electrical power to the heating element (5) while at the same time measuring the temperature of the adhesive (3), the extent to which electrical power is applied to the heating element (5) being controlled in dependence on the temperature measured, the measurement of the temperature of the adhesive being performed by determining the resistance of the heating element (5) with a resistance measuring unit (6), which transfers the resistance data to a unit for determining the temperature (7),
wherein the unit for determining the temperature (7) has material-specific data, by means of which the actual temperature in the heating element is determined in dependence on the resistance, and wherein a controller (8) is used to control the voltage, so that the heating is performed in a predetermined maximum/minimum temperature corridor in dependence on time, **characterized in that** the resistance is determined by means of measuring the voltage and current intensity, with a time difference between the measurement of the current intensity and the measurement of the voltage of ≤ 10 ms, preferably ≤ 1 ms, more preferably ≤ 100 µs and particularly preferably ≤ 10 µs.

2. Method according to Claim 1, wherein the control of the electrical power is performed in dependence on a temperature-resistance dataset, which comprises data materially and geometrically specific to the heating element used.

3. Method according to Claim 2, wherein the geometry-dependent characteristic data of the heating element (5) required for the temperature calculation are determined by means of an automatic resistance measurement, before or during the heating.

4. Method according to one of the preceding claims, wherein the control of the electrical power is performed in dependence on a time-temperature curve.

5. Method according to one of the preceding claims, wherein the control of the electrical power takes place with a maximum delay of ≤ 1000 ms, preferably ≤ 500 ms, more preferably ≤ 250 ms.

6. Method according to one of the preceding claims, wherein the adhesive (3) is solid in the non-activated state.

7. Method according to one of the preceding claims, wherein the adhesive (3) is a thermoset in the cured state.

8. Method according to one of the preceding claims, wherein at least one of the joining elements (1, 2), preferably both joining elements (1, 2), is/are a plastic or consist(s) of other non-metallic materials.

9. Method according to one of the preceding claims, wherein at least one joining element (1 or 2) is selected from the group consisting of bolts, angles, plates, holders and fittings.

10. Arrangement designed for carrying out a method according to one of Claims 1 - 9, comprising
(i) contacts for contacting a heating element (5) for applying electrical power,
(ii) a thermally activatable adhesive (3) in the middle of which a flat heating element (5), formed as a thin sheet-like formation, is arranged and
(iii) a control unit for controlling the electrical power in dependence on the temperature of the adhesive, wherein the arrangement is configured in such a way that the measurement of the temperature is performed by determining the resistance of the flat heating element (5) with a resistance measuring unit (6), which transfers the resistance data to a unit for determining the temperature (7), wherein the unit for determining the temperature (7) has material-specific data, by means of which the actual temperature in the heating element is determined in dependence on the resistance, and wherein a controller (8) is used to control the voltage, so that the heating is performed in a predetermined maximum/minimum temperature corridor in dependence on time, **characterized in that** the arrangement is configured in such a way that the resistance is determined by means of measuring the voltage and current intensity, with a time difference between the measurement of the current intensity and the measurement of the voltage of < 10 ms, preferably < 1 ms, more preferably < 100 µs and particularly preferably < 10 µs.

## Revendications

1. Procédé de liaison de deux éléments d'assemblage (1, 2), comprenant les étapes suivantes :
a) la fourniture de deux éléments d'assemblage (1, 2),
b) la fourniture d'une colle (3) thermoactivable,
c) la fourniture d'un élément de chauffage (5) réalisé en tant que structure mince,
d) l'agencement de l'élément de chauffage (5) au milieu de la colle (3),
e) l'agencement de l'élément de chauffage (5) et de la colle (3) entre les éléments d'assemblage (1, 2),
f) le chauffage de la colle (3) par sollicitation de l'élément de chauffage (5) avec une puissance électrique par mesure simultanée de la température de la colle (3), dans lequel l'étendue de la sollicitation de l'élément de chauffage (5) avec une puissance électrique est commandée en fonction de la température mesurée, dans lequel la mesure de la température de la colle est effectuée par détermination de la résistance de l'élément de chauffage (5) avec une unité de mesure de résistance (6) qui transmet les données de résistance à une unité de détermination de la température (7),
dans lequel l'unité de détermination de la température (7) dispose de données spécifiques au matériau, au moyen desquelles la température réelle dans l'élément de chauffage est déterminée en fonction de la résistance, et dans lequel la tension est commandée par le biais d'un régulateur (8) de sorte que le chauffage soit effectué dans un corridor de température maximum/minimum prédéterminé en fonction du temps,
**caractérisé en ce que** la résistance est déterminée par le biais de la mesure de la tension et de l'intensité de courant, avec une différence de temps entre l'intensité de courant et la mesure de tension ≤ 10 ms, de préférence ≤ 1 ms, de manière encore préférée ≤ 100 µs et de manière particulièrement préférée ≤ 10 µs.

2. Procédé selon la revendication 1, dans lequel la commande de la puissance électrique est effectuée en fonction d'un jeu de données de température-résistance qui comporte pour l'élément de chauffage utilisé des données spécifiques au matériau et à la géométrie.

3. Procédé selon la revendication 2, dans lequel les données caractéristiques dépendant de la géométrie, nécessaires au calcul de la température de l'élément de chauffage (5) sont déterminées par le biais d'une mesure de résistance automatique, avant ou pendant le chauffage.

4. Procédé selon l'une des revendications précédentes, dans lequel la commande de la puissance électrique est effectuée en fonction d'une courbe temps-température.

5. Procédé selon l'une des revendications précédentes, dans lequel la commande de la puissance électrique est effectuée avec une temporisation maximale ≤ 1000 ms, de préférence ≤ 500 ms, de manière encore préférée ≤ 250 ms.

6. Procédé selon l'une des revendications précédentes, dans lequel la colle (3) est résistante à l'état non activé.

7. Procédé selon l'une des revendications précédentes, dans lequel la colle (3) à l'état durci est un duromère.

8. Procédé selon l'une des revendications précédentes, dans lequel au moins un des éléments d'assemblage (1, 2), de préférence les deux éléments d'assemblage (1, 2) est une matière plastique ou se compose d'autres matériaux non métalliques.

9. Procédé selon l'une des revendications précédentes, dans lequel au moins un élément d'assemblage (1 ou 2) est sélectionné à partir du groupe se composant d'un boulon, d'une équerre, d'une plaque, d'un support et d'une ferrure.

10. Agencement, conçu pour la réalisation d'un procédé selon l'une des revendications 1 à 9, comprenant
(i) des contacts pour la mise en contact d'un élément de chauffage (5) pour la sollicitation avec une puissance électrique,
(ii) une colle (3) thermoactivable, dans laquelle un élément de chauffage (5) plat qui est réalisé comme structure mince, est agencé au milieu et
(iii) une unité de commande pour la commande de la puissance électrique en fonction de la température de la colle,
dans lequel l'agencement est configuré de telle manière que la mesure de température soit effectuée par le biais de la détermination de la résistance de l'élément de chauffage (5) plat avec une unité de mesure de résistance (6) qui transmet les données de résistance à une unité de détermination de la température (7), dans lequel l'unité de détermination de la température (7) dispose de données spécifiques au matériau, au moyen desquelles la température réelle dans l'élément de chauffage est déterminée en fonction de la résistance, et dans lequel la tension est commandée par le biais d'un régulateur (8) de sorte que le chauffage soit effectué dans un corridor de température maximum/minimum prédéterminé en fonction du temps, **caractérisé en ce que** l'agencement est configuré de telle manière que la résistance soit déterminée par le biais de la mesure de la tension et de l'intensité de courant, avec une différence de temps entre la mesure d'intensité de courant et la mesure de tension < 10 ms, de préférence < 1 ms, de manière encore préférée < 100 µs et de manière particulièrement préférée < 10 µs.
